(19) Europäisches Patentamt / European Patent Office / Office européen des brevets

(11) **EP 3 257 393 B1**

(12) **FASCICULE DE BREVET EUROPEEN**

(45) Date de publication et mention
de la délivrance du brevet:
**20.10.2021 Bulletin 2021/42**

(51) Int Cl.:
*A44C 5/10* *(2006.01)*    *G04B 31/00* *(2006.01)*
*G04B 13/02* *(2006.01)*    *G04B 37/14* *(2006.01)*

(21) Numéro de dépôt: **16174609.4**

(22) Date de dépôt: **15.06.2016**

(54) **VIS D'ASSEMBLAGE DE DEUX COMPOSANTS HORLOGERS**

SCHRAUBE ZUM ZUSAMMENBAU VON ZWEI UHRENKOMPONENTEN

SCREW FOR ASSEMBLING TWO TIMEPIECE COMPONENTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**20.12.2017 Bulletin 2017/51**

(73) Titulaire: **ROLEX SA
1211 Genève 26 (CH)**

(72) Inventeurs:
• **Catheline, Adrien
F-74520 Valleiry (FR)**

• **Rejzner, James
F-74160 Saint-Julien-en-Genevois (FR)**

(74) Mandataire: **Moinas & Savoye SARL
27, rue de la Croix-d'Or
1204 Genève (CH)**

(56) Documents cités:
**EP-A1- 0 165 206       EP-A1- 2 462 829
JP-A- 2005 124 770    JP-U- H 037 712
US-A1- 2012 069 720**

• **None**

**Description**

L'invention concerne une vis d'assemblage, ou d'attache, à pivotement, d'au moins deux composants horlogers, notamment deux maillons d'un bracelet, par exemple d'un bracelet de montre. Elle porte aussi sur un bracelet, et plus généralement sur une pièce d'horlogerie, comme une montre-bracelet, en tant que tels, comprenant au moins une telle vis d'assemblage pour l'assemblage à pivotement d'au moins deux de leurs composants.

Il est connu d'assembler deux maillons d'un bracelet de montre par le biais d'un axe de guidage en pivotement supporté par une vis, les maillons assemblés pouvant se déplacer en rotation les uns par rapport aux autres. Un assemblage de ce type est exposé à un risque de dévissage intempestif. Ce problème, bien connu des horlogers, est causé par les mouvements répétés des maillons les uns par rapport aux autres lors du porter du bracelet ou par des chocs.

Une première solution de l'état de la technique consiste à utiliser une colle, généralement appelée « frein-filet », disposée sur les filets d'une vis d'assemblage pour réduire le risque de dévissage intempestif. Une telle solution est délicate en pratique puisqu'il faut maitriser la bonne quantité de colle. Elle exige de plus un outillage spécialisé et un temps d'assemblage conséquent. Les opérations de service après-vente sont de plus complexes.

Le document CH695389 propose une autre solution. Il décrit un dispositif d'assemblage à pivotement de maillons d'un bracelet de montre. Ce dispositif d'assemblage comprend une vis munie d'une tête, à l'une de ses extrémités, et d'une partie filetée, à son autre extrémité. Une partie médiane de la vis, de forme cylindrique, joue le rôle d'axe de guidage en rotation de la maille centrale. Pour limiter le risque de dévissage intempestif, un canon tubulaire, en matériau élastique et pourvu d'un rétrécissement annulaire, est chassé dans un perçage de passage de la vis traversant l'une des mailles extérieures, et vient coopérer avec une portion prédéfinie de la vis. Lors de l'assemblage, la vis est introduite dans le canon jusqu'à engagement du canon et de la vis. Dans la position finale de serrage, le canon exerce sur la vis une force de serrage radiale qui s'ajoute à la force de maintien exercée par les filets de la vis. La vis est ainsi bloquée axialement par rapport au maillon. Une telle solution nécessite d'assembler plusieurs composants, ce qui implique un temps d'assemblage relativement long. En outre, la force de serrage exercée par le canon sur la vis devant être importante, les opérations d'assemblage et/ou de désassemblage s'avèrent difficiles. Il est également fait référence au document JP H03 7712 U divulguant les caractéristiques du préambule de la revendication 1.

La présente invention a pour objet de proposer une solution améliorée d'assemblage à pivotement de deux composants horlogers, qui ne comprend pas tout ou partie des inconvénients de l'état de la technique.

Plus précisément, un objet de l'invention est de proposer une solution plus simple et plus fiable d'assemblage à pivotement de deux composants horlogers.

A cet effet, l'invention repose sur une vis d'assemblage pour attacher à pivotement au moins deux composants horlogers dans une position d'assemblage, la vis d'assemblage comprenant au moins une portion de guidage permettant le pivotement d'un des composants horlogers et au moins une portion filetée permettant sa fixation avec un autre composant horloger, caractérisée en ce qu'elle comprend une portée destinée à venir en butée contre cet autre composant horloger et une zone de moindre rigidité mécanique pour réduire la pression de contact exercée au niveau de la portée de la vis d'assemblage dans la position d'assemblage des composants horloger. La zone de moindre rigidité mécanique est agencée au sein de la portion de guidage et comprend une section minimale inscrite dans un cercle de diamètre D10 tel que le rapport D10/ D3 est compris entre 0,1 et 0,9 inclus, voire entre 0,3 et 0,7 inclus, où D3 est le diamètre de la portion de guidage avoisinante. En plus, la zone de moindre rigidité comprend une largeur L10 telle que le rapport L10/L13 est compris entre 0,04 et 0,3 inclus, où L13 est la longueur d'une partie centrale de la vis d'assemblage comprenant la portion de guidage.

De préférence, la vis d'assemblage présente une portée d'aire accrue, supérieure ou égale à 0.8 mm$^2$, voire supérieure ou égale à 0.9 mm$^2$, voire supérieure ou égale à 1 mm$^2$.

De plus, la portion filetée de la vis d'assemblage est de préférence de faible dimension, et présente un diamètre extérieur ou nominal inférieur ou égal à 2 mm.

L'invention est plus précisément définie par les revendications.

Ces objets, caractéristiques et avantages de la présente invention seront exposés en détail dans la description suivante d'un mode de réalisation particulier fait à titre non-limitatif en relation avec les figures jointes parmi lesquelles :

La figure 1 représente une vis d'assemblage selon un mode de réalisation de l'invention.

La figure 2 représente deux maillons de bracelet assemblés à pivotement à l'aide d'une vis d'assemblage selon le mode de réalisation de l'invention.

La figure 3 représente une vue agrandie des deux maillons de bracelet de la figure 2 pour visualiser des détails de l'assemblage selon le mode de réalisation de l'invention.

La figure 4 représente plusieurs calculs de pression pour des assemblages de maillons de bracelet respectivement avec des vis d'assemblage différentes pour illustrer l'effet de l'invention.

L'invention concerne une vis d'assemblage, ou d'articulation, destinée à assembler aux moins deux composants horlogers pouvant pivoter l'un par rapport à l'autre. Elle peut notamment être utilisée pour assembler des maillons, par exemple des maillons d'un bracelet tel qu'un bracelet de montre-bracelet.

Ainsi, un mode de réalisation va être décrit ci-après de manière non limitative dans le cadre de l'assemblage de maillons d'un bracelet de montre. Par convention, nous appellerons direction longitudinale la direction parallèle à l'axe de la vis d'assemblage et direction transversale la direction perpendiculaire. De plus, nous considérerons la vis d'assemblage dans le sens de son introduction, sa première extrémité étant opposée à sa seconde extrémité comprenant sa tête et le terme amont désignant une partie orientée du côté de cette seconde extrémité.

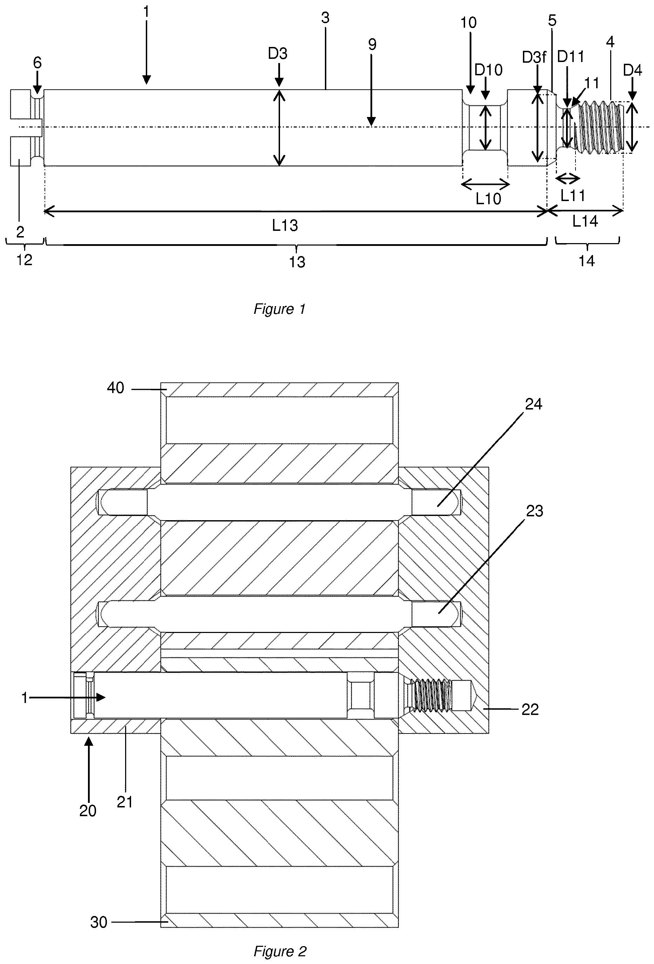

La figure 1 représente une vis d'assemblage 1 selon un mode de réalisation de l'invention. Cette vis est agencée autour d'un axe longitudinal 9, qui forme un axe de rotation lors de son actionnement. La vis comprend une première extrémité comprenant une portion filetée 4, de diamètre extérieur (nominal) D4. Elle comprend de plus une portion de guidage 3, en partie centrale, de forme cylindrique, de diamètre D3, dont la surface extérieure forme une surface de guidage à pivotement d'un maillon, comme cela sera détaillé ci-après. La vis comprend ensuite une tête 2 adaptée pour un actionnement à l'aide d'un outil, comme un tournevis, au niveau de sa seconde extrémité.

La vis d'assemblage 1 comprend de plus au moins une première zone de moindre rigidité mécanique 10. Cette zone est agencée au sein de la portion de guidage 3. Elle est avantageusement disposée à proximité de la portion filetée 4. Pour cela, son extrémité aval est de préférence positionnée à une distance L100, mesurée depuis l'extrémité aval de la portée 5, inférieure ou égale à la longueur L13/3, voire inférieure ou égale à L13/5, voire inférieure ou égale à L13/6. Dans le mode de réalisation, la distance L100 est de l'ordre de 1 mm. Cette première zone de moindre rigidité mécanique 10 se trouve de préférence dans la moitié de la vis disposée du côté de sa première extrémité, comprenant la portion filetée 4. Selon le mode de réalisation proposé, elle se présente sous la forme d'une gorge, de diamètre minimal D10 et de largeur selon la direction longitudinale. Préférentiellement, des congés sont créés en fond de gorge et sont dimensionnés, notamment maximisés, en fonction du format de la vis de façon à éviter les concentrations de contraintes. En variante, la zone de moindre rigidité mécanique 10 pourrait être formée par toute autre géométrie. Il peut ainsi par exemple s'agir d'une gorge de diamètre constant ou non. Cette zone peut être obtenue par tout enlèvement de matière au sein de la portion de guidage 3 de la vis ou par tout autre procédé de fabrication équivalent. L'espace creux obtenu, par exemple formé par cet enlèvement de matière, crée un vide. Cet espace creux respecte de préférence la symétrie de révolution autour de l'axe longitudinal 9 de la vis d'assemblage 1. La géométrie de cet espace creux agencé dans la surface de la vis d'assemblage est suffisante pour induire une baisse significative de la rigidité mécanique de la vis d'assemblage. Ainsi, il ne s'agit pas d'une simple petite gorge qui formerait une butée ou remplirait une autre fonction, mais d'une gorge prévue pour minimiser localement l'inertie de flexion du corps de la vis. Ainsi, cet espace creux est tel que le ratio D10/D3 est compris entre 0,1 et 0,9 inclus, voire entre 0,3 et 0,7. Comme cette zone de moindre rigidité mécanique 10 peut avoir une forme quelconque, sa section, de préférence sensiblement circulaire pour conserver une symétrie axiale, pourrait éventuellement ne pas être circulaire et être par exemple hexagonale. Dans ce cas, sa section minimale serait inscrite dans un cercle de diamètre D10 telle que le rapport D10/D3 est compris entre 0,1 et 0,9 inclus, voire entre 0,3 et 0,7 inclus. De plus, la largeur L10 de cette zone de moindre rigidité mécanique 10 est de même importante de façon à répartir au mieux les contraintes. Notamment, le ratio L10/L13 est compris entre 0,04 et 0,3 inclus, où L13 est la longueur de la partie centrale 13 de la vis d'assemblage 1, qui sera détaillée ci-après. Dans le mode de réalisation, la largeur L10 est de l'ordre de 1 mm. La zone de moindre rigidité mécanique est préférentiellement délimitée par des congés présentant un rayon de l'ordre de 0,5 mm ou supérieur à 0,5 mm. En variante, la zone de moindre rigidité mécanique 10 peut être agencée en dehors de la portion de guidage 3, en partie centrale 13 ou ailleurs. Enfin, la vis d'assemblage présente de préférence une petite dimension, et notamment, sa portion filetée présente avantageusement un diamètre extérieur ou nominal inférieur ou égal à 2 mm.

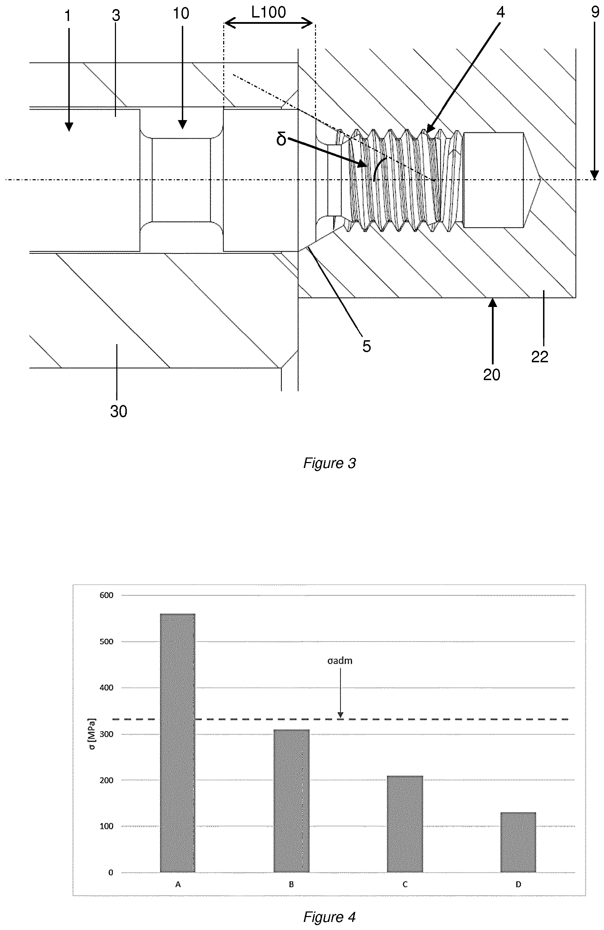

Enfin, la vis d'assemblage 1 comprend une portée 5, prévue pour venir en butée à l'encontre d'une surface de butée correspondante d'un des maillons à assembler, comme cela est illustré par les figures 2 et 3. Dans ce mode de réalisation, cette portée 5 présente une forme tronconique, s'étendant entre l'extrémité de la portion de guidage 3, de diamètre D3, et une zone de diamètre D3f réduit. Cette surface tronconique est finalement obtenue par un chanfrein amorcé à l'extrémité de la portion de guidage 3 de la vis d'assemblage 1, chanfrein qui présente un angle δ par rapport à l'axe longitudinal 9 de la vis d'assemblage, particulièrement illustré sur la figure 3. Cet angle δ peut être choisi sur la base d'un processus industriel prédéfini, en particulier vis-à-vis d'un procédé de fabrication optimal d'un trou taraudé du premier maillon, qui sera décrit ci-dessous. Dans le mode de réalisation représenté sur les figures, l'angle δ est égal à environ 30°. De manière plus générale, cet angle peut être compris entre 10° et 60° inclus, voire entre 20° et 45° inclus.

Selon le mode de réalisation, la vis d'assemblage 1 peut finalement être considérée comme comprenant trois parties. Ces dernières seront considérées ci-après dans l'ordre de leur introduction dans des ouvertures de composants horlogers pour réaliser leur assemblage :

- Une partie initiale 14, de longueur L14, comprenant la portée 5 suivie de la portion filetée 4. Ainsi, cette partie initiale 14 est partiellement filetée. Une seconde zone de moindre rigidité mécanique 11 est agencée entre ces deux éléments 4, 5. Cette zone se présente sous la forme d'une seconde gorge de diamètre minimal D11 et de largeur L11 selon la direction longitudinale. Cette seconde zone de moindre rigidité mécanique 11 peut présenter des variantes géométriques, de manière similaire à la première zone décrite précédemment. Ainsi, son diamètre D11 peut être constant ou non. Une telle conformation permet aussi de favoriser l'élongation ou la compression de la partie initiale 14 de la vis d'assemblage 1 selon les prescriptions requises pour obtenir un couple de serrage adéquat et adapté aux performances de tenue souhaitées. Préférentiellement, des congés sont créés en fond de gorge et sont maximisés en fonction du format de la vis d'assemblage, de façon à éviter les concentrations de contraintes. La seconde zone de moindre rigidité mécanique 11 est donc pratiquée au niveau de la partie initiale 14 de la vis d'assemblage, donc en aval (dans le sens de l'introduction de la vis) de la portée 5 et à proximité immédiate en amont de la portion filetée 4. Selon le mode de réalisation, cette seconde zone de moindre rigidité mécanique 11 peut comprendre une géométrie caractérisée par les expressions suivantes : $0,5 \leq D11/D4 \leq 0,9$ et $0,1 \leq L11/L14 \leq 0,6$ ;

- Une partie centrale 13, de longueur L13, comprenant la portion de guidage 3, qui intègre elle-même la première zone de moindre rigidité mécanique 10. Elle se présente sous une forme cylindrique continue, de diamètre D3 constant, outre la zone de moindre rigidité mécanique 10, prévue vers son extrémité à proximité de la partie initiale 14 ;

- Une partie finale 12, comprenant la tête 2, précédée optionnellement d'une gorge 6, prévue pour réceptionner un outil d'extraction de la vis, et ainsi permettre un démontage aisé et rapide, notamment lors d'opérations en boutique ou lors du service après-vente.

Les figures 2 et 3 représentent plus particulièrement la vis d'assemblage 1 selon le mode de réalisation, décrite précédemment, dans le cadre de l'assemblage de deux maillons 20, 30 d'un bracelet. Le premier maillon 20 comprend notamment deux mailles de bord 21, 22, qui sont solidarisées entre elles de manière connue, par des moyens d'assemblage 23, 24. Ces mêmes moyens d'assemblage 23, 24 solidarisent une troisième maille 40 au sein du premier maillon 20. Le deuxième maillon 30 se présente, sur la figure 2, sous la forme d'une unique maille de centre. Naturellement, des vis d'assemblage identiques peuvent être utilisées pour fixer plus de deux maillons d'un même bracelet, de préférence des maillons de rallonge d'un bracelet. Les maillons peuvent se présenter sous la forme d'une ou plusieurs mailles.

En position d'assemblage des deux maillons 20, 30, telle que représentée sur les figures 2 et 3, la première extrémité de la vis d'assemblage 1 est logée dans une ouverture de la seconde maille 22 du premier maillon 20 et sa seconde extrémité comprenant la tête 2 est logée au sein d'une ouverture débouchante de la première maille 21 du premier maillon 20. La portion filetée 4 de la vis coopère ainsi avec une portion filetée correspondante de la seconde maille 22 du premier maillon 20, qui comprend un trou taraudé. La vis d'assemblage 1 est de plus positionnée au sein d'une ouverture débouchante du second maillon 30. Les ouvertures respectives des deux maillons 20, 30 sont ainsi alignées et traversées en totalité ou partiellement par la vis d'assemblage 1. La partie initiale 14 de la vis d'assemblage 1 est intégralement intégrée dans la seconde maille 22 du premier maillon 20. La partie finale 12 et une portion de la partie centrale 13, de faible longueur, sont positionnées dans l'ouverture de la première maille 21 du premier maillon 20. Le reste de la partie centrale 13, incluant la zone de moindre rigidité mécanique 10, est positionnée au sein de l'ouverture du second maillon 30, et remplit la fonction de guidage en rotation de ce second maillon 30. La portée 5 de la vis d'assemblage est positionnée en butée à l'entrée de l'ouverture de la seconde maille 22, ouverture qui présente une partie tronconique formant une butée de géométrie correspondante à celle de la portée 5 et recouvrant préférentiellement l'intégralité de la portée 5 (même angle, et de préférence au moins même surface).

Dans cette position d'assemblage, le maillon central 30 est donc maintenu axialement entre les deux mailles de bord 21, 22, et est mobile en pivotement, à moindre jeu, autour de la portion de guidage 3 de la vis d'assemblage 1, donc selon un axe de rotation correspondant à l'axe longitudinal 9 de la vis d'assemblage 1.

En pratique, un assemblage de deux maillons avec une telle vis d'assemblage est réalisé par vissage de la vis d'assemblage jusqu'à atteindre un serrage défini par un couple prédéfini de la vis. Une prétension adaptée est ainsi appliquée à la vis pour garantir un assemblage pérenne, notamment évitant le « desserrage » intempestif de la vis d'assemblage, qui survient lors d'une faible rotation de la tête de vis qui entraine une chute élevée de couple au niveau de la vis. En remarque, une fois la vis desserrée, elle peut de plus être dévissée de manière intempestive, c'est-à-dire poursuivre sa rotation, en induisant alors seulement une faible chute de couple au niveau de la vis. Le desserrage intempestif de la vis peut ainsi induire son dévissage intempestif, et aboutir, dans le pire des cas, à la perte de la vis du bracelet et la chute du bracelet ou de la montre bracelet.

D'une manière connue, la prétension de la vis est induite lors du vissage par une déformation élastique du corps de la vis, en particulier sa portion filetée 4, lorsque la vis est en butée à l'encontre d'un des composants à assembler, la seconde maille 22 dans ce mode de réalisation. Cette force de prétension de la vis est optimisée pour garantir un assemblage pérenne, comme explicité cidessus.

Selon l'invention, il a été découvert qu'une optimisation est avantageusement atteinte en prévoyant une butée fixe de la vis. Par « butée fixe », nous entendons toute butée définie par des surfaces en contact indéformables, à savoir des surfaces en contact qui ne peuvent être matées. En effet, les études de la demanderesse ont montré que la diminution du couple de serrage de la vis s'explique notamment par une perte d'énergie potentielle élastique provoquée par de la déformation plastique pendant les phases de sollicitations de la portion filetée de la vis. Ainsi, la vis d'assemblage selon le mode de réalisation permet préférentiellement de mettre en œuvre des surfaces en contact qui ne peuvent être matées pour un couple de serrage donné et/ou lors des sollicitations du bracelet lors du porter de la montre, notamment lors de sollicitations en traction ou en torsion du brin de bracelet prenant part à l'assemblage.

Pour cela, la vis d'assemblage selon le mode de réalisation présente une première zone de moindre rigidité mécanique 10, décrite précédemment. Cette zone remplit la fonction de reprise des sollicitations extérieures, notamment des chocs, par des effets de fléchissement de la vis. Elle permet d'isoler la portion filetée 4 des sollicitations extérieures. Une telle conformation permet ainsi de minimiser les pressions de contact au niveau de la portée 5 de la vis et de la surface de butée correspondante de la seconde maille 22 du premier maillon 20. Une telle solution permet ainsi de définir une « butée fixe » entre la vis d'assemblage 1 et le premier maillon 20. Elle permet notamment d'obtenir des pressions de contact au niveau des surfaces respectives en butée qui sont inférieures aux contraintes admissibles des matériaux prenant part à l'assemblage, par exemple inférieures aux contraintes admissibles des alliages d'or employés couramment pour des maillons de bracelet.

Préférentiellement, la zone de moindre rigidité mécanique 10 se trouve en retrait des interfaces des maillons 20, 30 de façon à l'isoler des effets de cisaillement, en particulier lorsque le bracelet est sollicité en traction ou en torsion. Ainsi, la zone de moindre rigidité mécanique 10 peut être disposée au sein de l'alésage du second maillon 30. Cette zone se trouve donc positionnée au sein de la portion de guidage 3 de la vis d'assemblage 1. Sa localisation est toutefois définie au plus près de la portion filetée 4 de façon à isoler au mieux cette portion filetée des sollicitions extérieures. En variante, elle pourrait donc se trouver au sein du trou taraudé de la seconde maille 22, si celui-ci présente une longueur suffisante, par exemple en remplacement de la seconde zone de moindre rigidité mécanique 11 du mode de réalisation représenté.

D'autre part, une déformation plastique au niveau de la butée de la vis d'assemblage peut aussi être induite par une interface insuffisante de la vis d'assemblage et de sa surface de butée sur le maillon, pour un couple de serrage donné, par exemple du fait des faibles dimensions horlogères et du manque de volume à disposition au sein des assemblages horlogers.

Selon le mode de réalisation, cette interface correspond à l'aire A de la portée 5 de la vis d'assemblage 1, en contact surfacique avec la surface correspondante formant butée de la seconde maille 22. Cette aire A est donc de préférence maximisée. Selon le mode de réalisation de l'invention, l'aire A de forme tronconique d'angle $\delta$ peut se calculer par la formule suivante :

$$A = \frac{\pi(D3 + D3f)}{2}\sqrt{\left(\frac{D3 - D3f}{2}\right)^2 + \left(\frac{D3 - D3f}{2\tan\delta}\right)^2}$$

Dans l'application horlogère envisagée par le mode de réalisation de l'invention, au niveau de l'assemblage de maillons d'un bracelet, l'aire A est avantageusement supérieure à 0,8 mm², voire 0,9 mm², voire 1 mm², pour un diamètre extérieur ou nominal D4 de la portion filetée 4 inférieur ou égal à 2 mm. Une telle conformation qui maximise l'aire de portée au niveau de la butée de la vis d'assemblage permet avantageusement de réduire les pressions de contact au niveau de cette butée, et participe ainsi à l'obtention de l'effet technique recherché par l'invention. Cette augmentation de l'aire de la portée apporte ainsi une amélioration seule, par rapport aux solutions existantes de l'état de la technique, comme cela sera illustré en relation avec la figure 4. Toutefois, elle est avantageusement combinée à l'implémentation d'une zone de moindre rigidité mécanique 10 telle que définie précédemment.

La vis d'assemblage 1 décrite précédemment permet ainsi de fiabiliser un assemblage à pivotement de deux composants horlogers, en empêchant ou réduisant le risque de son desserrage intempestif.

Naturellement, l'invention ne se limite pas à la géométrie précise décrite dans le mode de réalisation précédent. Ainsi, préférentiellement, la portée 5 se situe en amont de la portion filetée 4 de façon à générer une traction de ladite portion 4 lors du serrage de la vis en butée à l'encontre de la surface de butée du premier maillon 20, comme représenté. Alternativement, la portée 5 peut également se situer en aval de la portion filetée 4, de façon à ce que la vis d'assemblage 1 constitue une vis « pointeau ». Une telle conformation permet alors de générer une compression de la portion initiale comprenant la portion filetée 4. Une telle solution pourrait être particulièrement avantageuse, notamment vis-à-vis de ses performances lors de sollicitations de flexion, qui tendent à comprimer d'autant plus ladite portion, et ainsi accentuer encore la prétension de la vis.

De plus, la portée 5 jouxte la portion filetée 4 dans le mode de réalisation. Avantageusement, la butée pour la vis est obtenue par une surface de butée d'un maillon sous la forme d'un chanfrein, de préférence à l'entrée d'un trou taraudé de la seconde maille 22 de façon à rapprocher autant que possible la portée 5 de la portion partiellement filetée 4.

Toutefois, en variante, la portée 5 peut jouxter la tête 2 de la vis d'assemblage 1. Dans ce cas de figure, la portée 5 peut définir un appui sous tête prévu pour coopérer avec une surface de la première maille 21, en reprenant l'application représentée par les figures 2 et 3, par exemple par un chanfrein d'entrée de l'alésage de la première maille 21 permettant le passage du corps de la vis.

Avantageusement, la portion de guidage 3 du corps de la vis d'assemblage 1, qui est prévue pour guider à pivotement à moindre jeu le deuxième maillon 30, est conformée pour minimiser les frottements entre la vis et le maillon pivotant, et ainsi minimiser les sollicitations de la vis sous l'effet du déplacement dudit maillon, en particulier les effets de glissement du maillon lorsqu'il est sollicité en traction. A cet effet, la portion de guidage 3 peut être recouverte d'un revêtement de surface ou subir un traitement dans l'optique de minimiser le coefficient de frottement entre la vis et le maillon. Notamment, la surface de la portion de guidage 3 peut être durcie par tout procédé, par exemple par un durcissement obtenu par un procédé connu par sa dénomination commerciale sous le nom de Kolstérisation, ou à partir d'un revêtement « dur » parmi CrN, TiAlN ou HfN. En variante, un revêtement qualifié de « mou » (aussi appelé lubrifiant solide) peut être utilisé, par exemple à partir d'un matériau connu par sa marque commerciale de Nuflon®GBT5. En variante, un revêtement de type lubrifiant visqueux (huile ou graisse) peut être implémenté. Alternativement ou complémentairement, un tel durcissement ou revêtement peut être appliqué au niveau de l'alésage du maillon guidé par cette portion de guidage. De plus, ce revêtement ou durcissement peut s'étendre au-delà de la portion de guidage 3, notamment sur toute la partie centrale 13 de la vis d'assemblage 1.

Avantageusement, la portion filetée 4 de la vis d'assemblage 1 peut être dotée d'un pas de vis fin de façon à maximiser le nombre de filets en prise et ainsi optimiser la tension appliquée dans le corps de la vis pour un couple de serrage donné. Par ailleurs, cette portion filetée 4 peut être adaptée de façon à permettre la mise en place d'un frein-filet, en particulier d'un frein-filet sec.

Une telle géométrie de vis peut, par ailleurs, être particulièrement adaptée aux petits diamètres de vis, par exemple à des vis dont le diamètre nominal des filets est inférieur ou égal à 2mm, ce qui rend une telle vis d'assemblage particulièrement adaptée aux applications horlogères.

La figure 4 représente un diagramme comparatif des pressions de contact au niveau des surfaces en butée d'une vis d'assemblage et de la seconde maille d'un maillon de bracelet, dans une configuration telle que représentée par la figure 2, pour respectivement quatre vis d'assemblage A, B, C, D différentes. Ainsi, dans tous ces cas, la surface de butée est définie par une portée tronconique située en amont d'une portion filetée ou partiellement filetée de la vis d'assemblage, cette surface de butée ou portée générant ainsi une traction de la portion filetée lors du serrage de la vis en butée à l'encontre de la surface de butée tronconique correspondante de la maille. Toutes les vis d'assemblage A, B, C, D présentent une dimension globalement semblable, notamment un même diamètre de la portion de guidage, de 1,7mm, et un même diamètre de filet. D'autre part, toutes ces vis d'assemblage sont en or, ainsi que les mailles du bracelet. Le couple de serrage de la vis d'assemblage, identique dans chacun de cas, est de 5 Ncm. Les pressions $\sigma$ de contact, indiquées en ordonnée du diagramme, sont calculées pour un porter conventionnel d'une montre-bracelet comprenant le bracelet intégrant lesdites vis d'assemblage. La contrainte admissible $\sigma_{adm}$ au niveau du contact est également représentée par la ligne en tireté.

Les quatre vis d'assemblage A, B, C, D testées sont représentées en abscisse. Elles diffèrent entre elles par les caractéristiques particulières suivantes :

- La vis d'assemblage A constitue une vis représentative de l'état de la technique, c'est-à-dire qu'elle ne comprend pas de zone de moindre rigidité mécanique et présente une portée de surface égale à 0.75 mm² ;
- La vis d'assemblage B ne comprend pas de zone de moindre rigidité mécanique et est similaire à la vis d'assemblage A, mais présente une portée de surface augmentée, de l'ordre de 1 mm² ;
- La vis d'assemblage C, selon un mode de réalisation de l'invention, est similaire à la vis d'assemblage A mais comprend une zone de moindre rigidité mécanique, caractérisée par une géométrie D10/D3 ≈ 0.6 et L10/L13 ≈ 0.09. Elle présente une aire de portée égale à 0.75 mm², comme la vis d'assemblage A ;
- La vis d'assemblage D, selon un autre mode de réalisation de l'invention, combine la zone de moindre rigidité mécanique de la vis d'assemblage C, avec une portée de surface augmentée, de l'ordre de 1 mm².

On remarque ainsi que la présence de la zone de moindre rigidité mécanique, présente sur les vis d'assemblage C et D, procure un effet technique important puisqu'elle permet de réduire les pressions de contact de manière significative. Sa combinaison avec une portée de surface augmentée, sur la vis d'assemblage D, permet de réduire les pressions de contact d'un facteur de l'ordre de quatre par rapport à la vis d'assemblage A de l'état de la technique. Il s'agit de la solution testée la plus performante. En remarque complémentaire, on note que la seule augmentation de l'aire de contact (vis d'assemblage B) apporte aussi une amélioration par rapport à la solution de l'état de la technique (vis d'assemblage A).

Dans tous les modes de réalisation décrits précédemment, la vis d'assemblage comprend finalement au moins une zone de moindre rigidité mécanique, telle que définie précédemment, qui réduit les pressions de contact de la vis d'assemblage au niveau de sa butée et augmente ainsi sa fiabilité, en réduisant fortement son risque de desserrage. L'invention ne se limite pas au mode de réalisation décrit et cette zone pourrait être disposée différemment sur la longueur de la vis, être en amont ou en aval de la portion filetée, plus ou moins éloignée de cette portion filetée, mais de préférence à proximité. En variante, il pourrait y avoir plusieurs zones de moindre rigidité mécanique complémentaires, au moins deux comme dans le mode de réalisation représenté sur la figure 1, voire trois ou plus.

D'autre part, la géométrie de la vis d'assemblage est de préférence aussi adaptée pour augmenter l'aire de sa portée, comme décrit précédemment.

La vis d'assemblage se présente de préférence en un matériau métallique, comme de l'or, du platine, du titane, de l'acier, tel que l'acier 316L ou 904L ou P558, ou des alliages à base de cobalt tels que le Phynox et le Nivaflex. Naturellement, d'autres matières non métalliques comme la céramique ou des composites peuvent également être utilisées pour la réalisation de telles vis. Bien entendu, cette liste de matériaux n'est nullement limitative. De plus, la vis se présente de préférence en une seule pièce, de structure monobloc. En variante, cette vis d'assemblage peut comprendre plusieurs éléments distincts assemblés entre eux.

La vis d'assemblage de l'invention est avantageusement utilisée pour une implémentation pour l'assemblage de maillons d'un bracelet, comme cela a été décrit. Ainsi, l'invention porte aussi sur un bracelet en tant que tel, pour lequel tout ou partie des maillons, qui peuvent présenter une géométrie quelconque, non limitée à l'exemple représenté en figures 2 et 3, sont assemblés à l'aide de telles vis d'assemblage. Elle porte aussi sur une montre bracelet en tant que telle, comprenant un tel bracelet. De plus, l'invention ne se limite pas à une utilisation d'une telle vis d'assemblage pour un bracelet, mais couvre aussi son implémentation pour l'assemblage à pivotement de deux composants horlogers quelconques d'une pièce d'horlogerie.

## Revendications

1. Vis d'assemblage (1) pour attacher à pivotement au moins deux composants horlogers dans une position d'assemblage, la vis d'assemblage (1) comprenant au moins une portion de guidage (3) permettant le pivotement d'un des composants horlogers, au moins une portion filetée (4) permettant sa fixation avec un autre composant horloger, une portée (5) destinée à venir en butée contre cet autre composant horloger et une zone de moindre rigidité mécanique (10) pour réduire la pression de contact exercée au niveau de la portée (5) de la vis d'assemblage dans la position d'assemblage des composants horloger, la zone de moindre rigidité mécanique (10) étant agencée au sein de la portion de guidage (3) , **caractérisée en ce que** la zone de moindre rigidité comprend une section minimale inscrite dans un cercle de diamètre D10 tel que le rapport D10/D3 est compris entre 0,1 et 0,9 inclus, voire entre 0,3 et 0,7 inclus, où D3 est le diamètre de la portion de guidage (3) avoisinante, et une largeur L10 telle que le rapport L10/L13 est compris entre 0,04 et 0,3 inclus, où L13 est la longueur d'une partie centrale (13) de la vis d'assemblage (1) comprenant la portion de guidage (3).

2. Vis d'assemblage (1) selon la revendication précédente, **caractérisée en ce que** sa portée (5) présente une aire supérieure ou égale à 0.8 mm$^2$, voire supérieure ou égale à 0.9 mm$^2$, voire supérieure ou égale à 1 mm$^2$.

3. Vis d'assemblage (1) selon l'une des revendications précédentes, **caractérisée en ce que** la portion filetée (4) présente un diamètre extérieur ou nominal inférieur ou égal à 2 mm.

4. Vis d'assemblage (1) selon l'une des revendications précédentes, **caractérisée en ce que** la portée (5) est disposée entre la zone de moindre rigidité mécanique (10) et la portion filetée (4).

5. Vis d'assemblage (1) selon l'une des revendications précédentes, **caractérisée en ce que** la zone de moindre rigidité mécanique (10) présente toute forme creuse, notamment une gorge de diamètre constant ou non.

6. Vis d'assemblage (1) selon l'une des revendications précédentes, **caractérisée en ce que** la zone de moindre rigidité mécanique (10) est agencée au sein de la portion de guidage (3), notamment à proximité de la portion filetée (4), son extrémité aval étant de préférence positionnée à une distance, mesurée depuis l'extrémité aval de sa portée (5), inférieure ou égale à la longueur L13/3, voire inférieure ou égale à L13/5, voire inférieure ou égale à L13/6, où L13 est la longueur d'une partie centrale (13) de la vis d'assemblage (1) comprenant la portion de guidage (3), ou dans la moitié de la vis d'assemblage (1) comprenant la portion filetée (4).

7. Vis d'assemblage (1) selon l'une des revendications précédentes, **caractérisée en ce que** la portée (5) comprend une forme tronconique, d'angle compris entre 10° et 60° inclus, voire entre 20° et 45° inclus.

**8.** Vis d'assemblage (1) selon l'une des revendications précédentes, **caractérisée en ce que** la portée (5) est positionnée en amont de la portion filetée (4) et/ou **en ce que** la portée (5) est positionnée à l'extrémité de la surface de guidage (3).

**9.** Vis d'assemblage (1) selon l'une des revendications précédentes, **caractérisée en ce qu'**elle comprend une partie initiale (14) comprenant la portée (5) et la portion filetée (4), une partie centrale (13) comprenant la surface de guidage (3) et au moins une zone de moindre rigidité (10), et une partie finale (12) comprenant une tête (2) pour son actionnement.

**10.** Vis d'assemblage (1) selon la revendication précédente, **caractérisée en ce qu'**elle comprend une seconde zone de moindre rigidité (11) disposée au sein de la partie initiale (14) entre la portée (5) et la portion filetée (4).

**11.** Bracelet, **caractérisé en ce qu'**il comprend au moins deux maillons (20, 30) assemblés à pivotement par l'intermédiaire d'une vis d'assemblage (1) selon l'une des revendications précédentes.

**12.** Bracelet selon la revendication précédente, **caractérisé en ce qu'**il comprend un premier maillon (20) comprenant une ouverture comprenant un trou taraudé dans lequel est agencé la portion filetée (4) de la vis d'assemblage (1), et une surface de butée à l'entrée de ladite ouverture contre laquelle est disposée en appui la portée (5) de la vis d'assemblage (1).

**13.** Bracelet selon la revendication 11 ou 12, **caractérisé en ce qu'**il comprend un premier maillon (20) comprenant deux mailles de bord (21, 22), de sorte qu'une tête (2) de la vis d'assemblage (1) se trouve logée au sein d'une ouverture d'une première maille de bord (21) et de sorte qu'une portion filetée (4) de la vis d'assemblage (1) se trouve logée au sein d'une ouverture de la seconde maille de bord (22), et **caractérisé en ce qu'**il comprend un second maillon (30) sous la forme notamment d'une unique maille centrale, comprenant une ouverture traversée par la vis d'assemblage (1), de sorte que le second maillon (30) est pivotable à moindre jeu autour d'une surface de guidage (3) de la vis d'assemblage.

**14.** Pièce d'horlogerie, notamment montre-bracelet, **caractérisée en ce qu'**elle comprend au moins deux composants assemblés à pivotement par l'intermédiaire d'une vis d'assemblage (1) selon l'une des revendications 1 à 10 et/ou un bracelet selon l'une des revendications 11 à 13.

**Patentansprüche**

**1.** Schraube zum Zusammenbau (1) zur schwenkbaren Befestigung von wenigstens zwei Uhrenkomponenten in einer Zusammenbauposition, wobei die Schraube zum Zusammenbau (1) wenigstens einen Führungsabschnitt (3), der die Schwenkung einer der Uhrenkomponenten ermöglicht, wenigstens einen Gewindeabschnitt (4), der ihre Fixierung mit einer anderen Uhrenkomponente ermöglicht, eine Auflagefläche (5), die dazu bestimmt ist, an dieser anderen Uhrenkomponente zur Anlage zu kommen, und einen Bereich verminderter mechanischer Steifigkeit (10) zum Verringern des Kontaktdrucks, der an der Auflagefläche (5) der Schraube zum Zusammenbau in der Zusammenbauposition der Uhrenkomponenten ausgeübt wird, umfasst, wobei der Bereich verminderter mechanischer Steifigkeit (10) innerhalb des Führungsabschnitts (3) angeordnet ist,
**dadurch gekennzeichnet, dass** der Bereich verminderter mechanischer Steifigkeit einen minimalen Querschnitt aufweist, der in einen Kreis mit einem solchen Durchmesser D10 einbeschrieben ist, dass das Verhältnis D10/D3 zwischen 0,1 und 0,9 einschließlich oder sogar zwischen 0,3 und 0,7 einschließlich liegt, wobei D3 der Durchmesser des benachbarten Führungsabschnitts (3) ist, und eine solche Breite L10, dass das Verhältnis L10/L13 zwischen 0,04 und 0,3 einschließlich liegt, wobei L13 die Länge eines mittleren Teils (13) der Schraube zum Zusammenbau (1) ist, der den Führungsabschnitt (3) umfasst.

**2.** Schraube zum Zusammenbau (1) nach dem vorhergehenden Anspruch, **dadurch gekennzeichnet, dass** ihre Auflagefläche (5) eine Fläche aufweist, die größer oder gleich 0,8 mm$^2$ oder sogar größer oder gleich 0,9 mm$^2$ oder sogar größer oder gleich 1 mm$^2$ ist.

**3.** Schraube zum Zusammenbau (1) nach einem der vorhergehenden Ansprüche, **dadurch gekennzeichnet, dass** der Gewindeabschnitt (4) einen Außendurchmesser oder Nenndurchmesser aufweist, der kleiner oder gleich 2 mm ist.

4. Schraube zum Zusammenbau (1) nach einem der vorhergehenden Ansprüche, **dadurch gekennzeichnet, dass** die Auflagefläche (5) zwischen dem Bereich verminderter mechanischer Steifigkeit (10) und dem Gewindeabschnitt (4) angeordnet ist.

5. Schraube zum Zusammenbau (1) nach einem der vorhergehenden Ansprüche, **dadurch gekennzeichnet, dass** der Bereich verminderter mechanischer Steifigkeit (10) eine beliebige hohle Form aufweist, insbesondere eine Rille mit konstantem oder nicht konstantem Durchmesser.

6. Schraube zum Zusammenbau (1) nach einem der vorhergehenden Ansprüche, **dadurch gekennzeichnet, dass** der Bereich verminderter mechanischer Steifigkeit (10) innerhalb des Führungsabschnitts (3) angeordnet ist, insbesondere in der Nähe des Gewindeabschnitts (4), wobei sein nachgelagertes Ende vorzugsweise in einem vom nachgelagerten Ende seiner Auflagefläche (5) aus gemessenen Abstand positioniert ist, der kleiner oder gleich der Länge L13/3 oder sogar kleiner oder gleich L13/5 oder sogar kleiner oder gleich L13/6 ist, wobei L13 die Länge eines mittleren Teils (13) der Schraube zum Zusammenbau (1) ist, der den Führungsabschnitt (3) umfasst, oder in der Hälfte der Schraube zum Zusammenbau (1), die den Gewindeabschnitt (4) umfasst.

7. Schraube zum Zusammenbau (1) nach einem der vorhergehenden Ansprüche, **dadurch gekennzeichnet, dass** die Auflagefläche (5) eine Kegelstumpfform mit einem Winkel zwischen 10° und 60° einschließlich oder sogar zwischen 20° und 45° einschließlich aufweist.

8. Schraube zum Zusammenbau (1) nach einem der vorhergehenden Ansprüche, **dadurch gekennzeichnet, dass** die Auflagefläche (5) dem Gewindeabschnitt (4) vorgelagert positioniert ist, und/oder dadurch, dass die Auflagefläche (5) am Ende der Führungsfläche (3) positioniert ist.

9. Schraube zum Zusammenbau (1) nach einem der vorhergehenden Ansprüche, **dadurch gekennzeichnet, dass** sie einen Anfangsteil (14) umfasst, der die Auflagefläche (5) und den Gewindeabschnitt (4) umfasst, einen mittleren Teil (13), der die Führungsfläche (3) und wenigstens einen Bereich verminderter Steifigkeit (10) umfasst, und einen Endteil (12), der einen Kopf (2) für ihre Betätigung umfasst.

10. Schraube zum Zusammenbau (1) nach dem vorhergehenden Anspruch, **dadurch gekennzeichnet, dass** sie einen zweiten Bereich verminderter Steifigkeit (11) umfasst, der innerhalb des Anfangsteils (14) zwischen der Auflagefläche (5) und dem Gewindeabschnitt (4) angeordnet ist.

11. Armband, **dadurch gekennzeichnet, dass** es wenigstens zwei Glieder (20, 30) umfasst, die durch eine Schraube zum Zusammenbau (1) nach einem der vorhergehenden Ansprüche schwenkbar verbunden sind.

12. Armband nach dem vorhergehenden Anspruch, **dadurch gekennzeichnet, dass** es ein erstes Glied (20) umfasst, das eine Öffnung umfasst, die eine Gewindebohrung, in welcher der Gewindeabschnitt (4) der Schraube zum Zusammenbau (1) angeordnet ist, und eine Anschlagfläche am Eingang der Öffnung, an welcher die Auflagefläche (5) der Schraube zum Zusammenbau (1) anliegend angeordnet ist, umfasst.

13. Armband nach Anspruch 11 oder 12, **dadurch gekennzeichnet, dass** es ein erstes Glied (20) umfasst, das zwei Randglieder (21, 22) umfasst, derart, dass ein Kopf (2) der Schraube zum Zusammenbau (1) im Inneren einer Öffnung eines ersten Randgliedes (21) aufgenommen ist, und derart, dass ein Gewindeabschnitt (4) der Schraube zum Zusammenbau (1) im Inneren einer Öffnung des zweiten Randgliedes (22) aufgenommen ist, und **dadurch gekennzeichnet, dass** es ein zweites Glied (30) insbesondere in der Form eines einzigen Mittelgliedes umfasst, das eine Öffnung umfasst, die von der Schraube zum Zusammenbau (1) durchquert wird, derart, dass das zweite Glied (30) mit minimalem Spiel um eine Führungsfläche (3) der Schraube zum Zusammenbau schwenkbar ist.

14. Uhr, insbesondere Armbanduhr, **dadurch gekennzeichnet, dass** sie wenigstens zwei Komponenten, die durch eine Schraube zum Zusammenbau (1) nach einem der Ansprüche 1 bis 10 zusammengebaut sind, und/oder ein Armband nach einem der Ansprüche 11 bis 13 umfasst.

**Claims**

1. An assembly screw (1) for the pivoting attachment of at least two horology components in a position of assembly, the assembly screw (1) comprising at least one guide portion (3) allowing one of the horology components to pivot, at least one threaded portion (4) allowing it to be fixed to another horology component, a shoulder (5) intended to come into abutment against this other horology component and a zone of lower mechanical rigidity (10) to reduce the contact pressure applied at the shoulder(5) of the assembly screw when the horology components are in the position of assembly, the zone of lower mechanical rigidity (10) being arranged within the guide portion (3), **characterized in that** the zone of lower mechanical rigidity (10) comprises a minimum cross section inscribed inside a circle of diameter D10 such that the ratio D10/D3 is comprised between 0.1 and 0.9 inclusive, or even between 0.3 and 0.7 inclusive, where D3 is the diameter of the adjacent guide portion (3), and a width L10 such that the ratio L10/L13 is comprised between 0.04 and 0.3 inclusive, where L13 is the length of a central part (13) of the assembly screw (1) comprising the guide portion (3).

2. The assembly screw (1) as claimed in the preceding claim, **characterized in that** its shoulder (5) has a surface area greater than or equal to $0.8 \, mm^2$, or even greater than or equal to $0.9 \, mm^2$, or even greater than or equal to $1 \, mm^2$.

3. The assembly screw (1) as claimed in one of the preceding claims, **characterized in that** the threaded portion (4) has an outside or nominal diameter less than or equal to 2 mm.

4. The assembly screw (1) as claimed in one of the preceding claims, **characterized in that** the shoulder (5) is positioned between the zone of lower mechanical rigidity (10) and the threaded portion (4) .

5. The assembly screw (1) as claimed in one of the preceding claims, **characterized in that** the zone of lower mechanical rigidity (10) has any hollow shape, notably a groove of constant or non-constant diameter.

6. The assembly screw (1) as claimed in one of the preceding claims, **characterized in that** the zone of lower mechanical rigidity (10) is arranged within the guide portion (3), notably close to the threaded portion (4), its downstream end preferably being positioned at a distance, measured from the downstream end of its shoulder (5), of less than or equal to the length L13/3, or even less than or equal to L13/5, or even less than or equal to L13/6, where L13 is the length of a central part (13) of the assembly screw (1) comprising the guide portion (3) or in the half of the assembly screw (1) that comprises the threaded portion (4).

7. The assembly screw (1) as claimed in one of the preceding claims, **characterized in that** the shoulder (5) has a truncated shape of an angle comprised between 10° and 60° inclusive, or even between 20° and 45° inclusive.

8. The assembly screw (1) as claimed in one of the preceding claims, **characterized in that** the shoulder (5) is positioned upstream of the threaded portion (4) and/or **characterized in that** the shoulder (5) is positioned at the end of the guide surface (3).

9. The assembly screw (1) as claimed in one of the preceding claims, **characterized in that** this screw comprises an initial part (14) comprising the shoulder (5) and the threaded portion (4), a central part (13) comprising the guide surface (3) and at least one zone of lower rigidity (10), and a final part (12) comprising a head (2) for actuating it.

10. The assembly screw (1) as claimed in the preceding claim, **characterized in that** this screw comprises a second zone of lower rigidity (11) positioned within the initial part (14) between the shoulder (5) and the threaded portion (4).

11. A bracelet, **characterized in that** this bracelet comprises at least two links (20, 30) assembled with pivoting via an assembly screw (1) as claimed in one of the preceding claims.

12. The bracelet as claimed in the preceding claim, **characterized in that** this bracelet comprises a first link (20) having an opening comprising a tapped hole in which the threaded portion (4) of the assembly screw (1) is arranged, and an abutment surface at the entrance to said opening against which the shoulder (5) of the assembly screw (1) is positioned bearing thereagainst.

13. The bracelet as claimed in claim 11 or 12, **characterized in that** this bracelet comprises a first link (20) comprising two edge link elements (21, 22) so that a head (2) of the assembly screw (1) is lodged within an opening in a first edge link element (21) and so that a threaded portion (4) of the assembly screw (1) is lodged within an opening of the second edge link element (22), and **in that** this bracelet comprises a second link (30) notably in the form of a single central link element, comprising an opening through which the assembly screw (1) passes, so that the second link (30) can pivot with a low amount of play about a guide surface (3) of the assembly screw.

**14.** A timepiece, notably a wrist watch, **characterized in that** this timepiece comprises at least two components assembled with pivoting by an assembly screw (1) as claimed in one of claims 1 to 10 and/or a bracelet as claimed in one of claims 11 to 13.

Figure 1

Figure 2

*Figure 3*

*Figure 4*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 695389
- JP H037712 U